# EUROPEAN PATENT SPECIFICATION

(11) **EP 3 196 102 B1**
(45) Date of publication and mention of the grant of the patent: **06.11.2019**
(21) Application number: 16305062.8
(22) Date of filing: 25.01.2016
(51) Int. Cl.: B62D 25/06, B60J 7/00, B60J 7/02

(54) **VEHICLE ROOF HAVING A GUIDE RAIL**
FAHRZEUGDACH MIT EINER FÜHRUNGSSCHIENE
TOIT DE VÉHICULE COMPRENANT UN RAIL DE GUIDAGE

(43) Date of publication of application: 26.07.2017
(73) Proprietor: Webasto SE, 82131 Stockdorf (DE)
(72) Inventor: VIVIEN, Jacques, 85700 LES CHATELLIERS-CHATEAUMUR (FR)
(74) Representative: advotec.

(56) References cited:
- EP-A1- 2 394 832
- EP-A1- 2 487 058
- EP-A2- 1 348 585
- WO-A2-2010/066213
- CA-A1- 2 602 999
- DE-A1-102014 010 420
- US-A- 4 969 681
- US-A1- 2008 155 902

## Description

The invention relates to a vehicle roof having the features of the preamble of claim 1.

From practice, vehicle roofs are known that constitute so-called panoramic roofs and include a rear fixed-roof element that is fixed relative to the vehicle and is transparent as well as a front roof element which is transparent, and which forms a movable panel of a sliding roof system. The vehicle roof may be realised as a spoiler roof or also as a sliding roof running on the outside. In the context of a spoiler roof, starting from the closed position for closing a roof opening, the lid element is initially lifted at its rear edge, when being opened, by actuating deploying levers and is then advanced above the rear fixed-roof element. The deploying levers are secured in the guide rails when advancing the lid element. In the context of a sliding roof running on the outside, the lid element, in the opening operation, is likewise initially deployed at its rear edge and is then advanced above the rear fixed-roof element. However, the deploying levers, which are used for deploying the lid element, are likewise advanced in the direction of the rear when the lid element is being advanced. For this purpose, guide rails are provided in the region of the rear fixed-roof element.

In the context of transparent roof elements, a need for a shading system in the form of a roof roller blind often exists so that any potentially troublesome incidence of light through the vehicle roof can be prevented. The roof roller blind includes a roller blind web, which, at each of its edges being arranged on both sides in relation to a vertical longitudinal centre plane of the roof, is guided in a guide track of a guide rail. The disadvantage of the guide rails is the installation space that is needed for this purpose, taking away some of the headroom of vehicle passengers. Mounting the guide rails has turned out to be laborious to date, too.

Document US 2008/0155902 teaches a sunroof assembly comprising a sunshade and a sunroof panel moulded together with a polycarbonate frame. The frame has a guide member and a sunshine guide member which are moulded along a length thereon, wherein edges of the sunshade travels along and within the sunshine guide member.

Therefore, it is the object of the invention to create a vehicle roof having a guide rail for a shading element or a movable roof element, said guide rail being characterised by a small structural height.

This object is attained by the vehicle roof having the features of claim 1.

In accordance with the invention, a vehicle roof that comprises a transparent roof panel and a guide rail for a shading element is thus proposed. The guide rail comprises a rail shell, which limits a guide track for the shading element and is a non-transparent moulded section moulded onto the roof panel according to an injection moulding process or a foam moulding process or a reaction injection moulding process (RIM). The transparent roof panel is a plastics or organic material panel, which, for example, is made from a polycarbonate material. The roof panel then forms a two-component injection moulded part together with the moulded section, wherein the roof panel is formed by a first plastics component and the moulded section having guide track elements is formed by a second plastics component.

In accordance with the invention, the guide rail, at the very least to some extent, is thus formed by an injection moulded section or a foam section moulded to the transparent roof panel. An injection moulded section or a foam section is commonly used in the context of transparent roof panels. The guide rail is thus, at the very least to some extent, integrated into the moulded section that is already present. The moulded section hence forms a multifunctional element, which, on the one hand, serves to guide the shading element and, on the other hand, to cover, for example, vehicle elements that are optically disturbing. By way of the invention, an integration of functions can thus be achieved at the moulded section, wherein it is simultaneously possible to save installation space since the guide rail, being optimised in terms of its form, can, at the very least to some extent, be integrated into the moulded section. This can in turn enlarge the headroom of vehicle passengers. In addition, by configuring the guide rail as a plastics moulded part, the requirements of a lightweight construction can be met. By integrating the guide rail at the very least partially into the moulded section of the roof panel being present in any case, producers can reduce their costs since tools, parts and assembly effort can be reduced. In addition, by realising the guide track at the moulded section during the corresponding injection moulding process or foam moulding process, it is easily possible, by correspondingly designing the tools, to satisfy the requirements regarding the form of the guide track.

In a preferred embodiment of the vehicle roof according to the invention, the guide rail is realised with two shells. It hence comprises a second rail shell, which limits the guide track together with the first rail shell and which is fixed to the first rail shell. Hence, the requirements for the moulding tool for the moulded section are reduced since, for example, slides and the like can be omitted.

In order to make it possible to join the second rail shell to the first rail shell without employing further parts, at the very least one of the rail shells includes a connecting means which is integrally moulded in one piece, and which interacts with a corresponding connecting element appertaining to the other rail shell.

For example, the connecting means comprises at least one fastening pin, which has been deformed on the face side for fixing the second rail shell to the first rail shell. Alternatively, the connecting means may also be realised as a latching pin or as a latching rib, which engages a corresponding recess of the other rail shell.

Further or alternatively, the two shells can be connected by means of an adhesive, by a welding process, by using rivets or the like.

In order to satisfy requirements of a lightweight construction, the second rail shell preferably likewise is made from a plastics material, but it is also conceivable to manufacture the second rail shell from metal, in particular from a light metal such as aluminium.

Increased stiffness requirements might exist for the guide rail. In order to meet said requirements, the plastics of the first moulded section 4 or of the first rail shell and/or the plastics of the second rail shell may be reinforced with an armouring being made of carbon fibres, glass fibres or the like.

Expediently, the transparent roof panel is a transparent fixed-roof element, that means a roof element that is fixed relative to the vehicle and that is immobile as against the vehicle structure.

A vehicle roof described hereinafter is given for the purpose of explanation. The vehicle roof has a sliding roof including a frame, which comprises a frame base body and a guide rail having a guide track for guiding a movable roof element. The frame base body is made from plastics. For realising the guide track of the guide rail, the frame base body forms a first rail shell and a covering element forms a second rail shell, wherein the two rail shells limit the guide track and are fixed to each other.

The frame base body that is made from plastics is thus moulded such that it includes a surface, which is suitable as a guide track and is limited by longitudinal ribs and/or by steps. The covering element, which is joined to the frame base body, guarantees that a slider of the movable lid element is securely guided in the guide track and does not inadvertently get detached from the same.

The frame base body, at which further roof elements may also be borne, in particular forms a multifunctional element, which, amongst other things, also serves to guide the movable roof element, but which may also be used to bear roof panels that are fixed relative to the vehicle, sliding roof motors and the like.

For mounting the covering element forming the second rail shell in a simple manner to the frame base body forming the first rail shell without employing further fixing parts, it is advantageous if at the very least one of the rail shells includes a connecting means which is integrally moulded in one piece, and which interacts with a corresponding connecting element assigned to the other rail shell.

The connecting means, in a special embodiment of the vehicle element according to the invention, comprises at least one fastening pin, which has been deformed on the face side for fixing the other rail shell.

Further or alternatively, the two shells can be connected by means of an adhesive, by a welding process, by using rivets or the like.

The covering element forming the second rail shell is preferably made from plastics, but may also consist of a metal material, in particular of a light metal material such as aluminium.

Further advantages and advantageous configurations of the subject-matter of the invention can be taken from the description, from the drawing and from the claims.

Exemplary embodiments of the subject-matter of the invention are illustrated in a schematically simplified way in the drawing and will be explained in more detail in the following description. In the drawing:
- Figure 1: shows a schematic top view onto a vehicle roof having a guide rail that is joined to a fixed-roof element;
- Figure 2: shows a section through the vehicle roof according to Figure 1 along line II-II in Figure 1;
- Figure 3: shows a schematic top view onto a vehicle roof having a sliding roof panel running on the outside; and
- Figure 4: shows a section through the vehicle roof according to Figure 3 along line IV-IV in Figure 3.

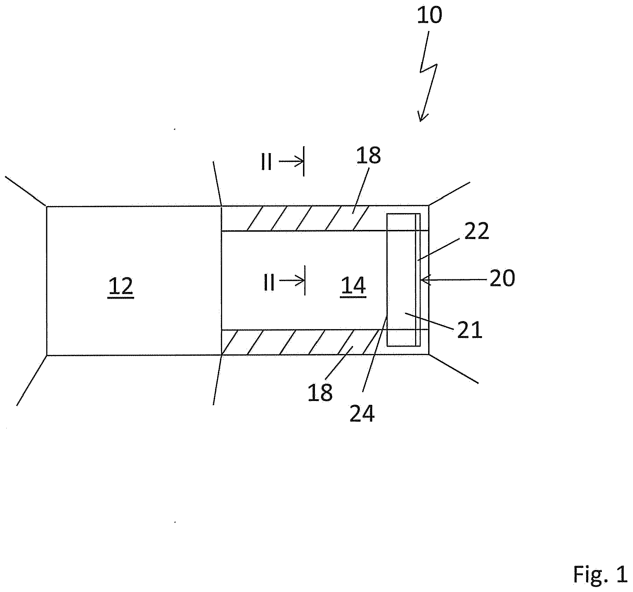

In Figure 1, a vehicle roof 10 is illustrated, being realised as a panoramic roof and including a first, front roof element 12 being a movable panel, which is part of a sliding roof system and can be advanced in the longitudinal direction of the roof for opening and closing a corresponding roof opening. Above a rear region of the relevant motor vehicle, the vehicle roof 10 includes a fixed-roof element 14 which is connected to the vehicle structure in a rigid manner, and which is arranged in the rear of the roof element 12 in relation to the closed position being illustrated in Figure 1.

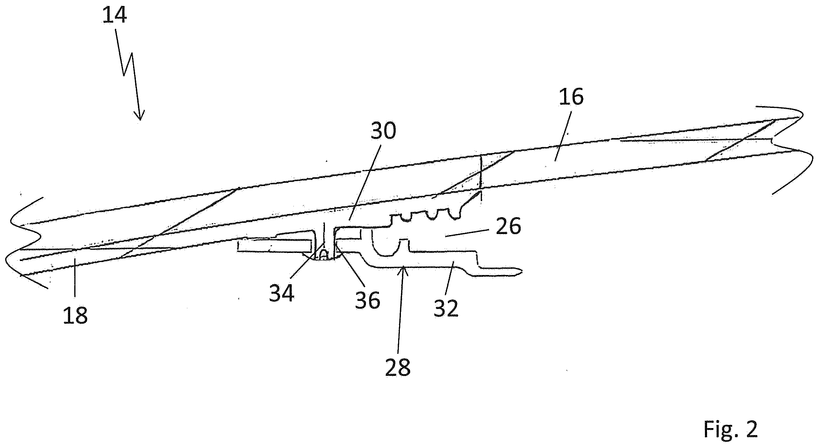

The fixed-roof element 14 shown in Figure 2 on its own comprises a transparent plastics panel 16, which has been produced from a polycarbonate material, for example according to an injection moulding process.

At its inner side or lower side facing the vehicle interior, the plastics panel 16, in relation to the vertical longitudinal centre plane of the roof on each of its two sides, is provided with a non-transparent, opaque moulded section 18 joined to the plastics panel 16 according to an injection moulding process. The constructional unit consisting of the plastics panel 16 and the moulded sections 18 is hence realised as a two-component injection moulded part, wherein the plastics panel 16 is made of a first transparent plastics component and the two moulded sections 18 are made from a second plastics component that is non-transparent and in particular black. By means of the moulded sections 18, body elements and functional elements can be covered so that these are not visible from the outer vehicle side and do not affect the optical impression of the vehicle.

In order to be able to protect vehicle passengers from potentially troublesome incidence of light through the vehicle roof 10, the fixed-roof element 14 is provided with a shading system 20, which is realised as a roof roller blind and whose roller blind web 21 can be wound up onto a winding shaft 22 being arranged in the rear edge region of the vehicle roof 10 or unwound from said winding shaft 22. The roller blind web 21, which, at its edge facing away from the winding shaft 22, includes a tension bow 24 that can be actuated manually or by a motor, is guided, in relation to the vertical longitudinal centre plane of the roof on each of its two sides, in a guide track 26 of a guide rail 28. The guide rails 28 are realised in a mirror-symmetrical fashion with respect to each other and are illustrated, in Figure 2, using the right guide rail 28 in relation to the forward direction of travel of the relevant vehicle. Each of the guide rails 28 comprises a first rail shell 30, which is formed by the respective moulded section 18. The rail shell 30 is thus an integral part of the moulded section 18 being moulded to the plastics panel 16 and limits the guide track 26 at the upper side. In order to limit the guide track 26 at the lower side, guide rail 28 includes a second rail shell 32, which, in a fashion corresponding to the first rail shell 30, is provided with a profile in the region of guide track 26 in order to be able to guide the roller blind web 21 and the tension bow 24.

The second rail shell 32 is fixed to rail shell 30 via fastening pins 34 integrally moulded at the moulded section 30 in one piece and constituting plastics rivets, reaching through corresponding recesses 36 of the second rail shell 32. At their face sides facing away from the plastics panel 16, the fastening pins 34 have been deformed according to a thermal converting method or an ultrasonic converting method, whereby the second rail shell 32 is held at the first rail shell 30 in a captive fashion. The fastening pins 34 thus form connecting means which are realised in one piece at the moulded section 18, and which interact with corresponding connecting elements of the second rail shell 32, which are formed by the recesses 36.

As an alternative to the fastening pins 34, which have been deformed for fixing the second rail shell 32, fastening means are also conceivable which are realised like pins or fins and to which the second rail shell 32 has been latched.

Correspondingly, connecting elements may also be moulded at the second rail shell in one piece, said elements being latched to the moulded section 18 forming the second rail shell 30.

The second rail shell 32 is preferably realised as an injection moulded plastics part or as a plastics extrusion part, but may also be made from metal sheets or be a metal extrusion part.

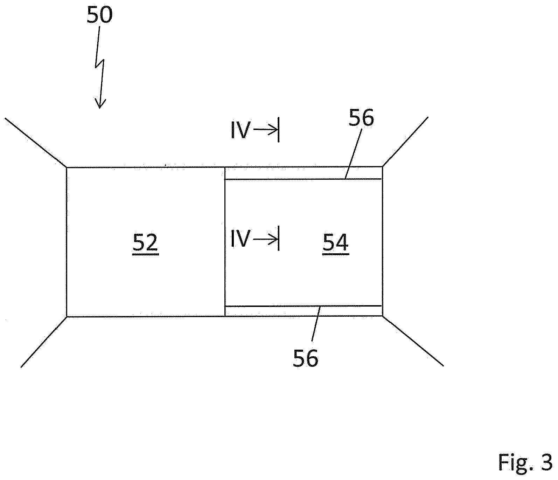

In Figure 3, a vehicle roof 50 is illustrated, which, in a manner corresponding to the vehicle roof being illustrated in Figure 1, is realised as a panoramic roof and includes a front roof element 52, by means of which a roof opening can be closed or at the very least partially cleared. The roof element 52 is a movable panel of a sliding roof running on the outside and may consequently be advanced, for being displaced into its open position, over a rear fixed-roof section 54. When being advanced into the open position, the roof element 52 is guided in guide rails 56 via sliders, which are arranged on both sides in relation to the vertical longitudinal centre plane of the roof in the region of the fixed-roof element 54 and extend in the longitudinal direction of the vehicle.

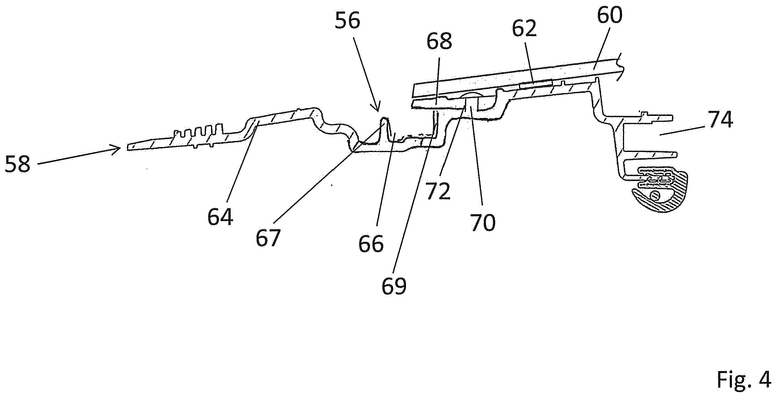

The guide rails 56 are, as it can be taken from Figure 4, realised at a frame 58 of sliding roof. The frame 58 has a frame base body 64, which is made from a plastics material and may be produced according to an injection moulding process. The frame base body 64, which is connected to the vehicle structure in a rigid fashion, serves as a support for a rear glass panel 60 which is fixed relative to the vehicle, and which is connected to the sliding roof frame 58 via an adhesive bead 62.

The frame base body 64, for realising a guide track 66 of the guide rail 56, forms a first rail shell having a fin 67 and a step 69. Together with a covering element 68 forming a second rail shell, the frame base body 64 limits the guide track 66, in which the corresponding slider of the roof element 52 is guided.

The covering element 68 forming the second rail shell is a plastics profile, which is connected to the frame base body 64 constituting the first rail shell via fastening pins 70 being integrally realised at the frame base body 64 in one piece. The fastening pins 70 reach through recesses 72 of the covering element 68 and have been deformed at their face sides facing away from the frame base body 64, for fixing the covering element 68. The fastening pins 70 thus function in the manner of plastics rivets.

At the inner side facing the vertical longitudinal centre plane of the roof, the frame base body 64 in addition includes a guide track 74 for a shading element, such as a roller blind web or a sliding headliner. The guide track 74 is realised by corresponding horizontal fins of the frame base body 64.

### List of reference numerals

- 10: vehicle roof
- 12: roof element
- 14: fixed-roof element
- 16: plastics panel
- 18: moulded section
- 20: shading system
- 21: roller blind web
- 22: winding shaft
- 24: tension bow
- 26: guide track
- 28: guide rail
- 30: first rail shell
- 32: second rail shell
- 34: fastening pin
- 36: recesses
- 50: vehicle roof
- 52: roof element
- 54: fixed-roof element
- 56: guide rail
- 58: sliding roof frame
- 60: glass panel
- 62: adhesive bead
- 64: frame base body
- 66: guide track
- 67: longitudinal fin
- 68: covering element
- 69: step
- 70: fastening pin
- 72: recesses
- 74: guide track

## Claims

1. A vehicle roof, comprising a transparent roof panel (16) and a guide rail (28) for a shading element, wherein the guide rail (28) comprises a rail shell (30), which limits a guide track (26) and is a moulded section (18) moulded at the roof panel (16) according to an injection moulding process, a reaction injection moulding process or a foam moulding process, **characterised in that** the moulded section (18) is non-transparent and the roof panel (16) forms a two-component injection moulded part together with the moulded section (18).

2. The vehicle roof according to claim 1, **characterised in that** the guide rail (28) comprises a second rail shell (32), which limits the guide track (26) together with the first rail shell (30) and is fixed to the first rail shell (30).

3. The vehicle roof according to claim 2, **characterised in that** at least one of the rail shells includes a connecting means which is integrally moulded in one piece, and which interacts with a corresponding connecting element appertaining to the other rail shell (32).

4. The vehicle roof according to claim 3, **characterised in that** the connecting means comprises at least one fastening pin (34), which has been deformed on the face side for fixing the other rail shell (32).

5. The vehicle roof according to any one of the claims 2 to 4, **characterised in that** the second rail shell (32) is made from a plastics material.

6. The vehicle roof according to claim 5 , **characterised in that** the transparent roof panel (16) is a transparent fixed-roof element.

## Patentansprüche

1. Fahrzeugdach, umfassend ein transparentes Dachpaneel (16) und eine Führungsschiene (28) für ein Beschattungselement, wobei die Führungsschiene (28) eine Schienenschale (30) umfasst, die eine Führungsbahn (26) begrenzt und ein Formabschnitt (18) ist, der nach einem Spritzgießprozess, einem Reaktionsspritzgießprozess oder einem Schäumprozess an dem Dachpaneel (16) ausgeformt ist, **dadurch gekennzeichnet, dass** der Formabschnitt (18) undurchsichtig ist und das Dachpaneel (16) zusammen mit dem Formabschnitt (18) ein Zweikomponenten-Spritzgießteil bildet.

2. Fahrzeugdach nach Anspruch 1, **dadurch gekennzeichnet, dass** die Führungsschiene (28) eine zweite Schienenschale (32) umfasst, die zusammen mit der ersten Schienenschale (30) die Führungsbahn (26) begrenzt und an der ersten Schienenschale (30) fixiert ist.

3. Fahrzeugdach nach Anspruch 2, **dadurch gekennzeichnet, dass** zumindest eine der Schienenschalen ein einstückig ausgeformtes Verbindungsmittel aufweist, das mit einem korrespondierenden Verbindungselement der anderen Schienenschale (32) zusammenwirkt.

4. Fahrzeugdach nach Anspruch 3, **dadurch gekennzeichnet, dass** das Verbindungsmittel mindestens einen Befestigungszapfen (34) umfasst, der zur Fixierung der anderen Schienenschale (32) stirnseitig umgeformt ist.

5. Fahrzeugdach nach einem der Ansprüche 2 bis 4, **dadurch gekennzeichnet, dass** die zweite Schienenschale (32) aus einem Kunststoffwerkstoff gefertigt ist.

6. Fahrzeugdach nach Anspruch 5, **dadurch gekennzeichnet, dass** das transparente Dachpaneel (16) ein transparentes Festdachelement ist.

## Revendications

1. Toit de véhicule, comprenant un panneau de toit (16) transparent et un rail de guidage (28) pour un élément d'ombrage, le rail de guidage (28) comprenant un coque de rail (30) qui limite une glissière de guidage (26) et est une section moulée (18) qui est moulée sur un panneau de toit (16) selon un procédé de moulage par injection, un procédé de moulage par injection-réaction ou par un procédé de moulage de mousse, **caractérisé en ce que** la section moulée (18) est non transparent et le panneau de toit (16) forme une pièce moulée par injection à deux composants conjointement avec la section moulée (18).

2. Toit de véhicule selon la revendication 1, **caractérisé en ce que** le rail de guidage (28) comprend une deuxième coque de rail (32) qui limite la glissière de guidage (26) conjointement avec la première coque de rail (30) et est fixé à la première coque de rail (30).

3. Toit de véhicule selon la revendication 2, **caractérisé en ce qu'**au moins une des coques de rail a un moyen de connexion qui est moulé en une seule pièce et qui coopère avec un élément de connexion correspondant qui appartient à l'autre coque de rail (32).

4. Toit de véhicule selon la revendication 3, **caractérisé en ce que** le moyen de connexion comprend au moins un tourillon de fixation (34) qui a été déformé sur le côté frontal pour fixer l'autre coque de rail (32).

5. Toit de véhicule selon l'une quelconque des revendications 2 à 4, **caractérisé en ce que** la deuxième coque de rail (32) est constitué d'une matière plastique.

6. Toit de véhicule selon la revendication 5, **caractérisé en ce que** le panneau de toit (16) transparent est un élément de toit fixe transparent.
